(19) Europäisches Patentamt
European Patent Office
Office européen des brevets

(11) **EP 1 906 355 B1**

(12) **EUROPEAN PATENT SPECIFICATION**

(45) Date of publication and mention
of the grant of the patent:
**03.08.2011 Bulletin 2011/31**

(21) Application number: **06767726.0**

(22) Date of filing: **30.06.2006**

(51) Int Cl.:
**G06T 1/00** (2006.01)      **B60R 1/00** (2006.01)
**G06T 3/00** (2006.01)      **H04N 7/18** (2006.01)

(86) International application number:
**PCT/JP2006/313138**

(87) International publication number:
**WO 2007/010729 (25.01.2007 Gazette 2007/04)**

(54) **DEVICE AND METHOD FOR COMPOSING IMAGE**

VORRICHTUNG UND VERFAHREN ZUM BILDSETZEN

DISPOSITIF ET PROCÉDÉ DE COMPOSITION D'IMAGE

(84) Designated Contracting States:
**DE FR GB IT**

(30) Priority: **15.07.2005 JP 2005207044**

(43) Date of publication of application:
**02.04.2008 Bulletin 2008/14**

(73) Proprietor: **Panasonic Corporation**
**Kadoma-shi**
**Osaka 571-8501 (JP)**

(72) Inventor: **KAWAKAMI, Satoshi**
**1-chome,**
**Chuo-ku, Osaka-shi, Osaka 540-6319 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A1- 0 946 055**      **EP-A1- 1 383 331**
**JP-A- 2004 147 210**      **JP-A- 2004 240 480**
**US-A1- 2004 260 469**      **US-A1- 2005 024 651**

• **NELSON C L: "3-dimensional video motion detection and assessment" SECURITY TECHNOLOGY, 2004. 38TH ANNUAL 2004 INTERNATIONAL CARNAHAN CON FERENCE ON ALBUQUERQUE, NM, USA OCT. 11-14, 2004, PISCATAWAY, NJ, USA,IEEE, 11 October 2004 (2004-10-11), pages 295-302, XP010776244 ISBN: 978-0-7803-8506-1**
• **OKAMOTO ET AL: "Development of Parking Assistance System Using Virtual Viewpoint Image Synthesis" ITS WORLD CONGRESS, XX, XX, 1 November 2000 (2000-11-01), pages 1-8, XP002418339**

**Description**

<Technical Field>

This invention relates to an image composing device for displaying a processed image of a camera installed on a vehicle in order to reduce a blind spot of the vehicle from a driver and facilitate a driving operation.

<Background Art>

Traditionally, as the image composing device for composing the respective images acquired from a plurality of cameras installed on the periphery of the vehicle, an image composing device has been proposed in which for example, images seen from above around a driver's own vehicle are deformed and composed and the composed image is displayed on a display device within the vehicle (for example, see Patent Reference 1). Another image composing device has been also proposed in which the position of a virtual viewpoint is dynamically changed in deformation/composition of the images to provide an optimum viewpoint image (composed image) according to a driving situation (for example, Patent Reference 2).

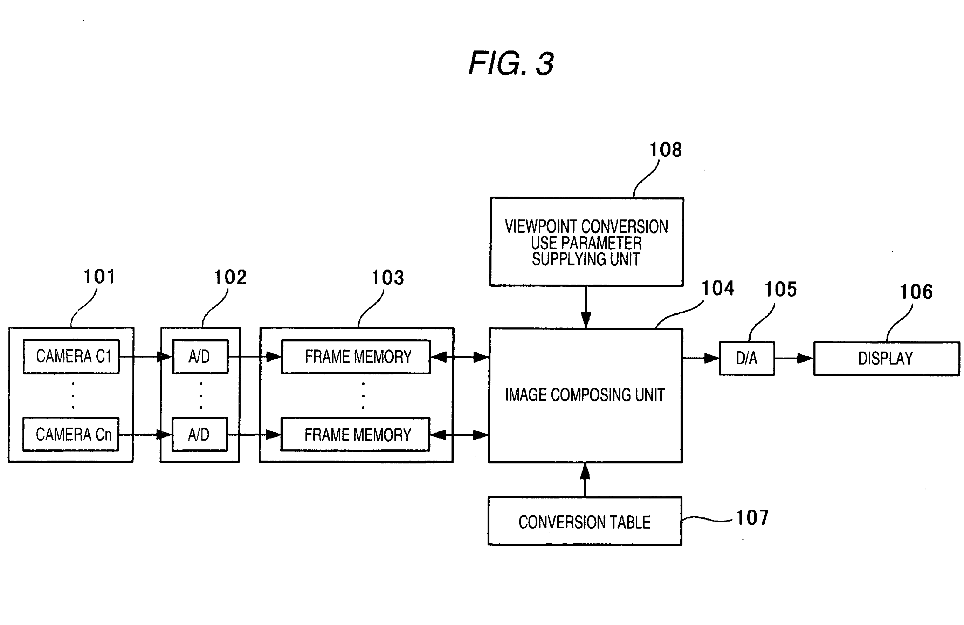

Fig. 3 is a block diagram of the schematic configuration of a vehicle peripheral monitoring device disclosed in Patent Reference 2. The vehicle peripheral monitoring device shown in this figure includes a camera unit 101, an analog/digital (A/D) conversion unit 102, a frame memory unit 103, an image composing unit 104, a digital/analog (D/A) conversion unit 105, a display 106, a conversion table 107 and a viewpoint changing use parameter supplying unit 108. The camera unit 101 includes a plurality of cameras C1 to Cn. The analog/digital conversion unit 102 and frame memory 103 also include analog/digital converters AD1 to ADn and frame memories FM1 to FMn, respectively, whose number is equal to that of the cameras C1 to Cn.

The images picked up by the cameras C1 to Cn are stored in the frame memories FM1 to FMn, respectively. The conversion table 107 is a ROM of a geometric conversion table for distortion correction. The viewpoint changing use parameter supplying unit 108 supplies a viewpoint changing use parameter to the image composing unit 104 in order to dynamically change the viewpoint changing. The image composing device 104 is constructed of a CPU or DSP (Digital Signal Processor). The image composing device 104 corrects the distortion of the images acquired from the cameras C1 to Cn on the basis of the geometric conversion table in the conversion table 107 and makes address computation for conversion on the basis of the viewpoint conversion parameter supplied from the viewpoint conversion parameter supplying unit 108.

In this way, the conversion table for distortion correction which is invariable for the viewpoint position is previously computed to make the ROM. For the viewpoint conversion/composition whose conversion rule is changed according to a starting point, the address computation for conversion is sequentially made on the basis of the parameter supplied from the viewpoint conversion use parameter supplying unit 108. Thus, by dynamically changing the viewpoint position, an optimum composed image can be displayed on the display 106 installed within the vehicle according to the driving situation.

Patent Reference 1 : JP-A-58(Showa)-110334
Patent Reference 2: JP-A-2001-339716

<Disclosure of the Invention>

<Problems that the Invention is to Solve>

Meanwhile, considering the image quality of the composed image, by interpolating/creating the composed image with the correspondence between an composed image and an input image being not 1 pixel to 1 pixel but 1 pixel to plural pixels, the image quality can be improved. In this case, if the input image is considered two-dimensionally, in order to acquire one pixel of the composed image, two pixels in each of X-direction and Y-direction, i.e. four pixels in total are required. Correspondingly, the quantity of access to the frame memory increases. Since the accessed band in the frame memory influences the production cost, it is important how the image quality is improved in the limited accessed band. Concretely, there are a technique of limiting improvement of the image quality to a specific portion of the composed image and another technique of reading out the one pixel without interpolating if the interpolating ratio is high. In both techniques, however, the quantity of access to the entire frame memory changes according to the position of the virtual viewpoint.

However, in the conventional image composing device, increase or decrease in the quantity of memory access to the frame memory due to dynamic changing of the virtual viewpoint is not considered. Therefore, owing to failure in the read-out of the image data attributable to shortage in the accessed band in the frame memory, the image may be lost. Further, if a line memory is loaded, the image read out at the time of a previous line is disadvantageously displayed. Incidentallyl, in the case of the NTSC (National Television Standards Committee) system, since the time axis in interlace differs in an even line and an odd line, for example, even if two lines of the odd line are outputted in the same image, a different image corresponding to the odd line therebetween resides so that the resultant image becomes unnatural.

US 2004/0260469 A1 relates to composing an image from a virtual viewpoint out of multiple images taken by different cameras. By means of a 3-dimensional projection model, the images picked up by a camera are translated and combined to be displayed on a screen in the vehicle.

Paper by Nelson "3D video motion detection and assessment," 38th Annual 2004 Int. Conf. on Security Technology, IEEE, 2004 relates to a 3-dimensional video motion detection system. A space of the monitored area is subdivided into 3-dimensional zones, each of which is covered by at least two cameras. If a camera fails, the system can adjust to operate without this camera, down to a minimum of two cameras. The self assessment capability enables the identification of a sensor failure or tampering with any sensor.

This invention has been accomplished in view of the above circumstances. An object of this invention is to provide an image composing device and image composing method which can exactly display a composed image even if a virtual viewpoint is dynamically changed.

The above object is achieved by the features of the independent claims.

In the image composing device defined by the present invention , the camera image which could not be read out by said memory controlling means owing to shortage in the accessed band in the frame memory is replaced by another image data (e.g. specific image data such as bit map data) thereby to create the composed image. For this reason, even if the virtual viewpoint is dynamically changed, the image will not be lost and the image read out at the time of the previous line will not be displayed, thereby permitting the exact composed image to be always displayed.

If at least one camera image can be read out from the frame memory, without being replaced by another image data (specific image data such as bit map data, the composed image of the actual camera images can be acquired.

Where a single composite pixel composed from plural pixels is created, if at least one camera image can be read out from the frame memory, without being replaced by another image data (specific image data such as bit map data, the composed image of the actual camera images can be acquired.

Since the quantity of memory access darta of the virtual viewpoint conversion data is controlled within the range not exceeding the accessed band in the frame memory, the processing of replacing the camera image which could not be read out by another image data can be omitted.

The camera image which could not be read out by said memory controlling means owing to shortage in the accessed band in the frame memory by another data (e.g. specific image data such as bit map data) thereby to create the composed image. For this reason, even if the virtual viewpoint is dynamically changed, the image will not be lost and the image read out at the time of the previous line will not be displayed, thereby permitting the exact composed image to be always displayed.

If at least one camera image can be read out from the frame memory, without being replaced by another image data (specific image data such as bit map data, the composed image of the actual camera images can be acquired.

Where a single composite pixel composed from plural pixels is created, if at least one camera image can be read out from the frame memory, without being replaced by another image data (specific image data such as bit map data, the composed image of the actual camera images can be acquired.

<Brief Description of the Drawings>

Fig. 1 is a block diagram showing the schematic arrangement of an image composing device according to the first embodiment of this invention.
Fig. 2 is a block diagram showing the schematic arrangement of an image composing device according to the second embodiment of this invention.
Fig. 3 is a block diagram of the schematic arrangement of a conventional image composing device.

<Description of Reference Numerals and Signs>

10 camera unit
11 coordinate conversion table storing unit
12 virtual viewpoint conversion data creating unit
13 viewpoint conversion use parameter supplying unit

14 memory controlling unit
15 frame memory
16 virtual viewpoint image converting unit
17 display unit
18 frame-memory accessed-band computing unit
19 memory access data controlling unit

<Best Mode of Carrying out the Invention>

Now referring to the drawings, a detailed explanation will be given of preferable embodiments of this invention.

(Embodiment 1)

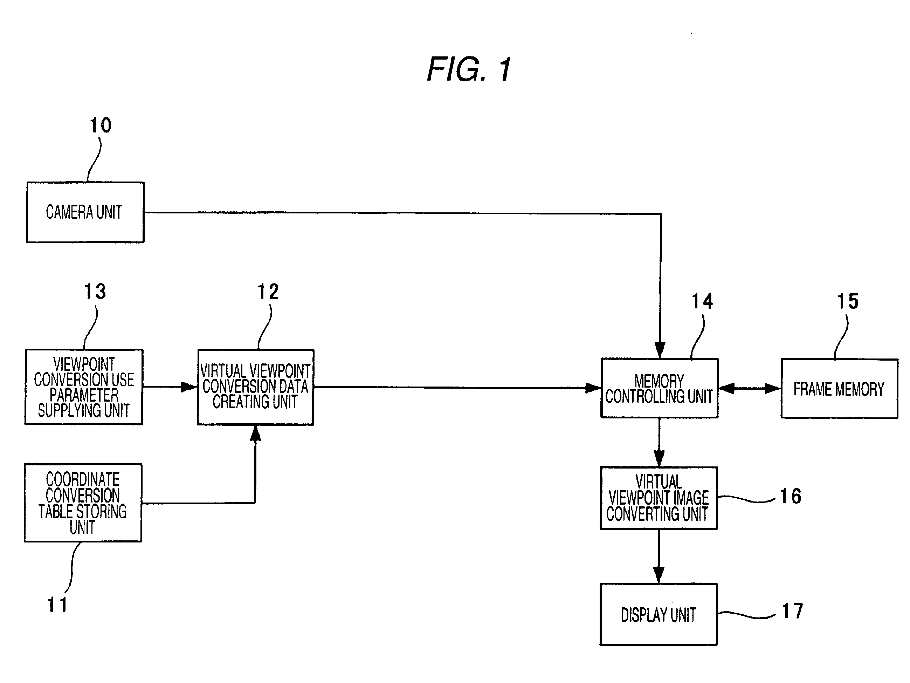

Fig. 1 is a block diagram showing the schematic arrangement of an image composing device according to the first embodiment of this invention. In this figure, the image composing device according to this embodiment includes a camera unit 10, a coordinate conversion table storing unit 11, a virtual viewpoint conversion data creating unit 12, a viewpoint conversion use parameter supplying unit 13, a memory controlling unit 14, a frame memory 15, a virtual viewpoint image converting unit 16 and a display unit 17.

The camera unit 10 is constructed of a plurality of cameras (not shown) like before, and is used for picking up an object. The coordinate conversion table storing unit 11 stores a coordinate conversion table indicative of the correlation between an input image and a distortion-corrected image, i.e. the relationship between the image coordinates after conversion and the image coordinates before conversion. The virtual viewpoint conversion data creating unit 12 sequentially computes the correlation between the distortion-corrected image and the composed image thereby to create the virtual viewpoint conversion data for acquiring the image seen from the virtual viewpoint. The viewpoint conversion use parameter supplying unit 13 supplies, to the virtual viewpoint conversion data creating unit 12, the parameter on the virtual viewpoint position necessary to create the composed image. The frame memory 15 stores camera images.

The memory controlling unit 14 executes write and read of the camera images for the frame memory 15 to create the composed image. The virtual viewpoint image converting unit 16 replaces the camera image which could not be read out by the memory controlling unit 14 owing to shortage in the accessed band in the frame memory 15 by another image data such as a bit map data. In this case, if at least one camera image can be read out from the frame memory 15, without being replaced by another image data such as the bit map data, the composed image of the actual camera images can be acquired. The display unit 17 visually displays the composed image produced from the virtual viewpoint image converting unit 16.

Next, an explanation will be given of the operation of the image composing device having the arrangement described above. In the virtual viewpoint conversion data creating unit 12, the virtual viewpoint conversion data indicative of the correlation between the composed image seen from the virtual viewpoint and the input image are created on the basis of the coordinate conversion table stored in the coordinate conversion table storing unit 11 and the parameter on the virtual viewpoint position supplied from the viewpoint conversion use parameter supplying unit 13. The contents of the virtual viewpoint conversion data are the XY coordinates $(X_i, Y_i)$ of the input image corresponding to the XY coordinates $(X_o, Y_o)$ of the composed image, and an X-axis interpolating coefficient $X_k$ and an Y-axis interpolating coefficient $Y_k$.

$$(X_o,\ Y_o) = X_k \times \{Y_k \times (X_i, Y_i) + (1 - Y_k) \times (X_i, Y_i+1)\} + (1 -$$

$$X_k) \times \{Y_k \times (X_i+1, Y_i) + (1 - Y_k) \times (X_i+1,\ Y_i+1)\}\ \dots\ (1)$$

In this case, the one pixel of the composed image is acquired from four pixels of the input image of $(X_i, Y_i)$, $(X_i, Y_i+1)$, $(X_i+1, Y_i)$ and $(X_i+1, Y_i+1)$. However, considering the case where $X_k = 1$ or $Y_k = 1$, the number of the pixels actually required changes in a range from one to four pixels according to the value of the interpolating coefficient.

The memory controlling unit 14 executes write of the camera images for the frame memory 15 and also executes read of the camera images based on the virtual viewpoint conversion data created by the virtual viewpoint conversion data creating unit 12 using the remaining accessed band in the frame memory 15, thereby creating the composed image. If no camera image can be read out owing to shortage in the accessed band in the framer memory 15, the memory controlling unit 14 produces the information indicative of-failure of the read. In this case, where no camera image can be read out owing to shortage in the accessed band in the frame memory 15, the memory controlling unit 14 notifies the virtual viewpoint image converting unit 16 of the failure of the read. In the virtual viewpoint image converting unit 16, the composed image is computed using the above Equation (1) on the basis of the camera image read from the frame memory 15. The composed image is displayed on the display unit 17.

As described above, in the image composing device according to this embodiment, the coordinate conversion table indicative of the correlation between the input image and the distortion-corrected image and the parameter on the virtual viewpoint position necessary to create the composed image are prepared; on the basis of the coordinate conversion table and the parameter on the virtual viewpoint point, the virtual viewpoint conversion data indicative of the correlation between the input image and the virtual viewpoint are created; the write of the camera images is executed for the frame memory 15 and also using the remaining accessed band in the frame memory 15, the read of the camera images based on the virtual viewpoint conversion data is executed thereby to create the composed image; and if no camera image can be read out owing to shortage in the accessed band in the frame memory 15, the camera image which could not be read out from the frame memory 15 is replaced by any bit map data. For this reason, even if the virtual viewpoint is dynamically changed so that the quantity of access of the memory controlling unit 14 to the frame memory 15 exceeds the accessed band, the image will not be lost and the image read out at the time of the previous line will not be displayed, thereby permitting the exact composed image to be always displayed.

Where the image composing device according to this embodiment is employed in the vehicle peripheral monitoring device, it is possible to reduce the blind spot from the vehicle driver and facilitate the driving operation.

Incidentally, in this embodiment, in the virtual viewpoint image converting unit 16, if the read of the camera image has only ended in failure, the pertinent composed image is replaced by any bit map data. However, where a plurality of camera image data are required in order to compute the composed image, if the read of at least one camera image data has succeeded, the composed image may be acquired using this camera image data.

(Embodiment 2)

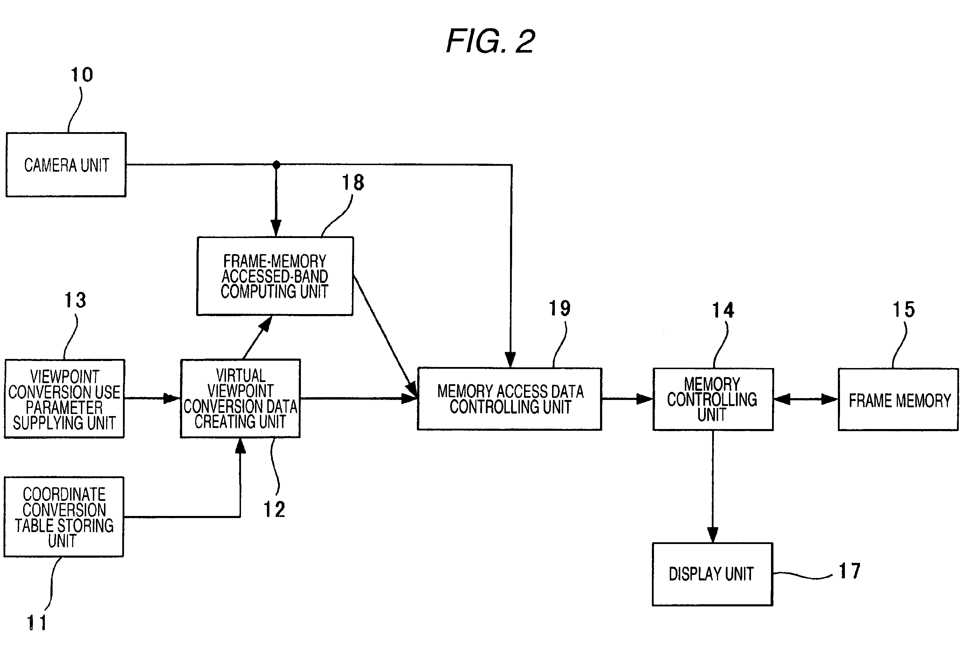

Fig. 2 is a block diagram showing the schematic arrangement of an image composing device according to the second embodiment of this invention. In this figure, like reference numerals refer to like constituent elements in Fig. 1. In Fig. 2, the image composing device according to this embodiment includes a camera unit 10; a coordinate conversion table storing unit 11; a virtual viewpoint conversion data creating unit 12; a viewpoint conversion use parameter supplying unit 13; a frame memory 15; a frame-memory accessed-band computing unit 18 for computing the quantity of memory access to the frame memory 15 on the basis of the number of input camera images and the virtual viewpoint conversion data created by the virtual viewpoint conversion data creating unit 12, a memory access data controlling unit 19 for controlling the quantity of access to the frame memory 15 by controlling, if the quantity of access to the frame memory 15 computed by the frame-memory accessed-band computing unit 18 exceeds the accessed band in the frame memory 15, the interpolating coefficient of the virtual viewpoint conversion data thereby to approximate Xk or Yk to 1; a memory controlling unit 14 for executing write of the camera images for the frame memory 15 and also executing the read of the camera images based on the virtual viewpoint conversion data whose quantity of memory access data is controlled by the memory access data controlling unit 19 using the remaining accessed band in the frame memory 15, thereby creating the composed image; and a display unit 17 for visually displaying the composed image created by the memory controlling unit 14.

Next, an explanation will be given of the operation of the image composing device having the arrangement described above. In the virtual viewpoint conversion data creating unit 12, the virtual viewpoint conversion data indicative of the correlation between the composed image seen from the virtual viewpoint and the input image are created on the basis of the coordinate conversion table supplied from the coordinate conversion table storing unit 11 and the parameter on the virtual viewpoint position supplied from the viewpoint conversion use parameter supplying unit 13. The contents of the virtual viewpoint conversion data, as in the first embodiment described above, are the XY coordinates $(X_i, Y_i)$ of the input image corresponding to the XY coordinates $(X_o, Y_o)$ of the composed image, and an X-axis interpolating coefficient Xk and an Y-axis interpolating coefficient Yk. The frame-memory accessed-band computing unit 18 computes the quantity of access necessary for access to the frame memory 15 on the basis of the camera image and the virtual viewpoint conversion data. If the quantity of access exceeds the accessed band, in the memory access data controlling unit 19, the X-axis interpolating coefficient and the Y-axis interpolating coefficient are approximated to "1" in the order of the value near to "1", thereby controlling the quantity of access. When the quantity of access becomes lower than the accessed band, the control is completed. In the memory controlling unit 14, the write and read of the camera image for the frame memory 15 are executed so that the composed image is created on the basis of the camera thus read. The composed image is displayed on the display unit 17.

As described above, in the image composing device according to this embodiment, the coordinate conversion table indicative of the correlation between the input image and the distortion-corrected image and the parameter on the virtual viewpoint position necessary to create the composed image are prepared; on the basis of the coordinate conversion table and the parameter on the virtual viewpoint point, the virtual viewpoint conversion data indicative of the correlation between the input image and the virtual viewpoint are created; the quantity of memory access to the frame memory 15 is computed on the basis of the virtual viewpoint conversion data thus created and the number of input camera images;

the quantity of memory access data of the virtual viewpoint conversion data is controlled on the basis of the quantity of memory access computed; and the write of the camera images is executed for the frame memory 15 and also using the remaining accessed band in the frame memory 15, the read of the camera images based on the virtual viewpoint conversion data whose quantity of memory access data is controlled is executed. For this reason, even if the virtual viewpoint is dynamically changed so that the quantity of access of the memory controlling unit 14 to the frame memory 15 exceeds the accessed band, the image will not be lost and the image read out at the time of the previous line will not be displayed, thereby permitting the exact composed image not confusing the driver to be always displayed. Particularly, in this embodiment, since the quantity of memory access data of the virtual viewpoint conversion data is controlled within the range not exceeding the accessed band of the frame memory 15, the processing of replacing the camera image which could not be read out by another image data can be omitted.

Where the image composing device according to this embodiment is also employed in the vehicle peripheral monitoring device, it is possible to reduce the blind spot from the vehicle driver and facilitate the driving operation.

This invention has been explained in detail and referring to the specific embodiment. However, it is apparent to those skilled in the art that this invention can be changed or modified in various manners without departing from the scope of the invention.

This application is based on Japanese Patent Application (Patent Application No. 2005-207044) filed on July 15, 2005.

<Industrial Application>

This invention gives an effect that even if the virtual viewpoint is dynamically changed, the image will not be lost and the image read out at the time of the previous line will not be displayed, thereby permitting the exact composed image to be always displayed. This invention, therefore, can be applied to a vehicle peripheral monitoring device for displaying a processed image of a camera installed on a vehicle.

**Claims**

1.    An image composing device comprising:

   a coordinate conversion table storing means (11) for storing a coordinate conversion table indicative of the correlation between an input image and a distortion-corrected image;
   a virtual viewpoint conversion data creating means (12) for creating virtual viewpoint conversion data indicative of the correlation between the input image and the composed image seen from the virtual viewpoint on the basis of the coordinate conversion table stored in said coordinate conversion table storing means (11) and the parameter on a virtual viewpoint position;
   a viewpoint conversion use parameter supplying means (13) for supplying, to said virtual viewpoint conversion data creating means (12), the parameter on said virtual viewpoint position necessary to create a composed image;
   **characterized by**
   a memory controlling means (14) for executing write of the camera images in a frame memory (15), and also, by using the remaining accessed band in the frame memory (15), executing read of the camera images based on the virtual viewpoint conversion data, thereby creating the composed image, and for producing the information indicative of failure of the read if a camera image in the frame memory cannot be read out owing to shortage in the accessed band to said frame memory (15); and
   a virtual viewpoint image converting means (16) for replacing, if the information indicative of failure of the read of any camera image is outputted from said memory controlling means (14), the camera image which could not be read out by said memory controlling means (14) by readable another image data.

2.    The image composing device according to claim 1, wherein said virtual viewpoint image converting means (12) creates the composed image without using the camera image which could not be read by said memory control means (14).

3.    The image composing device according to claim 1, wherein if at least one camera image can be read out from the frame memory, the virtual viewpoint image converting means (12) is operable to create the composed image by using the at least one camera image without using the another image data.

4.    The image composing device according to claim 1, wherein where a single composite pixel composed from plural pixels is created, even if a part of the plural pixels cannot be read from said memory control means (14) owing to shortage of an accessed band in said frame memory (15), said virtual viewpoint image converting means (11) creates the composed image using remaining pixels.

5. An image composing method comprising the steps of:

preparing (11) a coordinate conversion table indicative of the correlation between an input image and a distortion-corrected image and the parameter on a virtual viewpoint position necessary to create a composed image;
creating (12), on the basis of the coordinate conversion table and the parameter on the virtual viewpoint point, virtual viewpoint conversion data indicative of the correlation between the input image and the virtual viewpoint, **characterized by**
executing write (14) of camera images in a frame memory, and also, by using the remaining accessed band in the frame memory (15), executing read of the camera images based on the virtual viewpoint conversion data, thereby creating the composed image, and
for producing the information indicative of failure of the read if a camera image in the frame memory cannot be read out owing to shortage in the accessed band to said frame memory; and
replacing (16), if the information indicative of failure of the read of any camera image is outputted, the camera image which could not read out from the frame memory (15) by another readable image data.

6. The image composing method according to claim 5, wherein the composed image is created without using the camera image which could not be read owing to shortage in the accessed band in said frame memory.

7. The image composing method according to claim 5, wherein if at least one camera image can be read out from the frame memory, the composed image is created by using the at least one camera image without using the another image data.

8. The image composing method according to claim 5, wherein where a single composite pixel composed from plural pixels is created, even if a part of the plural pixels cannot be read from said memory control means owing to shortage of an accessed band in said frame memory, the composed image is created using remaining pixels.


**Patentansprüche**

1. Bildzusammensetzungsvorrichtung, die umfasst:

eine Einrichtung (11) zum Speichern einer Koordinatenumwandlungstabelle, die eine Koordinatenumwandlungstabelle speichert, die die Korrelation zwischen einem Eingangsbild und einem Verzerrungskorrektur unterzogenen Bild anzeigt;
eine Einrichtung (12) zum Schaffen von Daten zur Umwandlung zu einem virtuellen Gesichtspunkt, mit der Daten zur Umwandlung zu einem virtuellen Gesichtspunkt, die die Korrelation zwischen dem Eingangsbild und dem zusammengesetzten Bild von dem virtuellen Gesichtspunkt aus gesehen anzeigen, auf Basis der in der Einrichtung (11) zum Speichern einer Koordinatenumwandlungstabelle und des Parameters für eine Position des virtuellen Gesichtspunktes geschaffen werden;
eine Einrichtung (13) zum Zuführen eines Parameters zur Verwendung bei Gesichtspunkt-Umwandlung, mit der der Einrichtung (12) zum Erzeugen von Daten zur Umwandlung zu einem virtuellen Gesichtspunkt der Parameter für die Position des virtuellen Gesichtspunktes zugeführt wird, der erforderlich ist, um ein zusammengesetztes Bild zu erzeugen;
**gekennzeichnet durch**
eine Speicher-Steuereinrichtung (14) zum Ausführen von Schreiben der Kamera-Bilder in einem Frame-Speicher (15) und des Weiteren zum Ausführen von Lesen der Kamera-Bilder auf Basis der Daten zur Umwandlung zu einem virtuellen Gesichtspunkt unter Verwendung des verbleibenden Zugriffsbandes in dem Frame-Speicher (15), um so das zusammengesetzte Bild zu schaffen und die Informationen zu erzeugen, die Fehlschlag des Lesevorgangs anzeigen, wenn ein Kamera-Bild in dem Frame-Speicher aufgrund von Mangel in dem Zugriffsband für den Frame-Speicher (15) nicht ausgelesen werden kann; und
eine Einrichtung (16) zum Umwandeln eines Bildes von einem virtuellen Gesichtspunkt, die, wenn die Information, die Fehlschlag des Lesens eines Kamera-Bildes anzeigt, von der Speicher-Steuereinrichtung (14) ausgegeben wird, das Kamera-Bild, das **durch** die Speicher-Steuereinrichtung (14) nicht ausgelesen werden konnte, **durch** lesbare andere Bilddaten ersetzt.

**2.** Bildzusammensetzungsvorrichtung nach Anspruch 1, wobei die Einrichtung zum Umwandeln eines Bildes von einem virtuellen Gesichtspunkt das zusammengesetzte Bild ohne Verwendung des Kamera-Bildes schafft, das durch die Speicher-Steuereinrichtung nicht gelesen werden konnte.

**3.** Bildzusammensetzungsvorrichtung nach Anspruch 1, wobei, wenn wenigstens ein Kamera-Bild aus dem Frame-Speicher ausgelesen werden kann, die Einrichtung (12) zum Umwandeln eines Bildes von einem virtuellen Gesichtspunkt so betrieben werden kann, dass sie das zusammengesetzte Bild unter Verwendung des wenigstens einen Kamera-Bildes und ohne Verwendung der anderen Bilddaten schafft.

**4.** Bildzusammensetzungsvorrichtung nach Anspruch 1, wobei, wenn ein einzelnes zusammengesetztes Pixel, das sich aus mehreren Pixeln zusammensetzt, selbst dann geschaffen wird, wenn ein Teil der mehreren Pixel aufgrund von Mangel in einem Zugriffsband in dem Frame-Speicher (15) nicht aus der Speicher-Steuereinrichtung (14) gelesen werden kann, die Einrichtung (11) zum Umwandeln des Bildes von einem virtuellen Gesichtspunkt das zusammengesetzte Bild unter Verwendung verbleibender Pixel schafft.

**5.** Bildzusammensetzungsverfahren, das die folgenden Schritte umfasst:

Erstellen (11) einer Koordinatenumwandlungstabelle, die die Korrelation zwischen einem Eingangsbild und einem Verzerrungskorrektur unterzogenen Bild anzeigt, und des Parameters über die Position eines virtuellen Gesichtspunktes, der zum Erzeugen eines zusammengesetzten Bildes erforderlich ist;
Schaffen (12) von Daten zur Umwandlung zu einem virtuellen Gesichtspunkt, die die Korrelation zwischen dem Eingangsbild und dem virtuellen Gesichtspunkt anzeigen, auf Basis der Koordinatenumwandlungstabelle und des Parameters über den virtuellen Gesichtspunkt,
**gekennzeichnet durch**
Ausführen von Schreiben (14) von Kamera-Bildern in einem Frame-Speicher und des Ausführens von Lesen der Kamera-Bilder auf Basis der Daten zur Umwandlung zu einem virtuellen Gesichtspunkt unter Verwendung des verbleibenden Zugriffsbandes in dem Frame-Speicher (15), um so das zusammengesetzte Bild zu schaffen und die Informationen zu erzeugen, die Fehlschlag des Lesens anzeigen, wenn ein Kamera-Bild in dem Frame-Speicher aufgrund von Mangel in dem Zugriffsband für den Frame-Speicher nicht ausgelesen werden kann; und
Ersetzen (16) des Kamera-Bildes, das nicht aus dem Frame-Speicher (15) ausgelesen werden konnte, **durch** andere lesbare Bilddaten, wenn die Information ausgegeben wird, die Fehlschlag des Lesens von Kamera-Bildern anzeigt.

**6.** Bildzusammensetzungsverfahren nach Anspruch 5, wobei das zusammengesetzte Bild ohne Verwendung des Kamera-Bildes geschaffen wird, das aufgrund von Mangel in dem Zugriffsband in dem Frame-Speicher nicht gelesen werden konnte.

**7.** Bildzusammensetzungsverfahren nach Anspruch 5, wobei, wenn wenigstens ein Kamera-Bild aus dem Frame-Speicher ausgelesen werden kann, das zusammengesetzte Bild unter Verwendung des wenigstens einen Kamera-Bildes ohne Verwendung der anderen Bilddaten geschaffen wird.

**8.** Bildzusammensetzungsverfahren nach Anspruch 5, wobei, wenn ein einzelnes zusammengesetztes Pixel, das sich aus mehreren Pixeln zusammensetzt, selbst dann geschaffen wird, wenn ein Teil der mehreren Pixel aufgrund von Mangel in einem Zugriffsband in dem Frame-Speicher (15) nicht aus der Speicher-Steuereinrichtung gelesen werden kann, das zusammengesetzte Bild unter Verwendung verbleibender Pixel geschaffen wird.

**Revendications**

**1.** Dispositif de composition d'image comprenant :

un moyen d'enregistrement de table de conversion de coordonnées (11) pour enregistrer une table de conversion de coordonnées indiquant la corrélation entre une image d'entrée et une image dont on a corrigé la distorsion ;
un moyen de création de données de conversion de point de vue virtuel (12) pour créer des données de conversion de point de vue virtuel indiquant la corrélation entre l'image d'entrée et l'image composée vue depuis le point de vue virtuel en se basant sur la table de conversion de coordonnées enregistrée dans ledit moyen d'enregistrement de table de conversion de coordonnées (11) et le paramètre sur une position de point de vue virtuel ;

un moyen de fourniture de paramètre d'utilisation de conversion de point de vue (13) pour fournir audit moyen de création de données de conversion de point de vue virtuel (12) le paramètre sur ladite position de point de vue virtuel nécessaire pour créer une image composée ;

**caractérisé par**

un moyen de commande de mémoire (14) pour effectuer l'écriture des images d'une caméra dans une mémoire de trame (15) et également, en utilisant la bande restante à laquelle il a été accédé dans la mémoire de trame (15), exécuter la lecture des images de la caméra en se basant sur les données de conversion de point de vue virtuel de façon à créer l'image composée et pour produire les informations indiquant le défaut de lecture si une image de la caméra dans la mémoire de trame ne peut pas être lue en raison d'une pénurie dans la bande à laquelle il a été accédé vers ladite mémoire de trame (15) ; et

un moyen de conversion d'image de point de vue virtuel (16) pour, si les informations indiquant le défaut de lecture d'une quelconque image de la caméra sont fournies en sortie par ledit moyen de commande de mémoire (14), remplacer l'image de la caméra ne pouvant pas être lue par ledit moyen de commande de mémoire (14) par des données d'une autre image lisible.

2. Dispositif de composition d'image selon la revendication 1, dans lequel ledit moyen de conversion d'image de point de vue virtuel (12) crée l'image composée sans utiliser l'image de la caméra qui ne peut pas être lue par ledit moyen de commande de mémoire (14).

3. Dispositif de composition d'image selon la revendication 1, dans lequel si au moins une image de la caméra peut être lue dans la mémoire de trame, le moyen de conversion d'image de point de vue virtuel (12) peut être utilisé pour créer l'image composée en utilisant l'au moins une image de la caméra sans utiliser les autres données d'image.

4. Dispositif de composition d'image selon la revendication 1, dans lequel lorsqu'un pixel composite unique composé de plusieurs pixels est créé, même si une partie des différents pixels ne peut pas être lue par ledit moyen de commande de mémoire (14) en raison d'une pénurie d'une bande à laquelle il a été accédé dans ladite mémoire de trame (15), ledit moyen de conversion d'image de point de vue virtuel (11) crée l'image composée en utilisant les pixels restants.

5. Procédé de composition d'image comprenant les étapes consistant à :

préparer (11) une table de conversion de coordonnées indiquant la corrélation entre une image d'entrée et une image dont on a corrigé la distorsion et le paramètre sur une position de point de vue virtuel nécessaire pour créer une image composée ;

créer (12), en se basant sur la table de conversion de coordonnées et le paramètre sur une position de point de vue virtuel, des données de conversion de point de vue virtuel indiquant la corrélation entre l'image d'entrée et le point de vue virtuel,

**caractérisé par**

l'exécution de l'écriture (14) des images d'une caméra dans une mémoire de trame et également, en utilisant la bande restante à laquelle il a été accédé dans la mémoire de trame (15), effectuer la lecture des images de la caméra en se basant sur les données de conversion de point de vue virtuel de façon à créer l'image composée et pour produire les informations indiquant le défaut de lecture si une image de la caméra dans la mémoire de trame ne peut pas être lue en raison d'une pénurie dans la bande à laquelle il a été accédé vers ladite mémoire de trame ; et

si les informations indiquant le défaut de lecture d'une quelconque image de la caméra sont fournies en sortie, remplacer (16) l'image de la caméra ne pouvant pas être lue par la mémoire de trame (15) par des données d'une autre image lisible.

6. Procédé de composition d'image selon la revendication 5, dans lequel l'image composée est créée sans utiliser l'image de la caméra qui ne peut pas être lue en raison d'une pénurie dans la bande à laquelle il a été accédé dans ladite mémoire de trame.

7. Procédé de composition d'image selon la revendication 5, dans lequel si au moins une image de la caméra peut être lue dans la mémoire de trame, l'image composée est créée en utilisant l'au moins une image de la caméra sans utiliser les autres données d'image.

8. Procédé de composition d'image selon la revendication 5, dans lequel lorsqu'un pixel composite unique composé de plusieurs pixels est créé, même si une partie des différents pixels ne peut pas être lue par ledit moyen de commande de mémoire en raison d'une pénurie d'une bande à laquelle il a été accédé dans ladite mémoire de trame, l'image composée est créée en utilisant les pixels restants.

*FIG. 1*

Block diagram (FIG. 1):
- 10 CAMERA UNIT
- 13 VIEWPOINT CONVERSION USE PARAMETER SUPPLYING UNIT
- 11 COORDINATE CONVERSION TABLE STORING UNIT
- 12 VIRTUAL VIEWPOINT CONVERSION DATA CREATING UNIT
- 14 MEMORY CONTROLLING UNIT
- 15 FRAME MEMORY
- 16 VIRTUAL VIEWPOINT IMAGE CONVERTING UNIT
- 17 DISPLAY UNIT

## FIG. 2

EP 1 906 355 B1

## FIG. 3

EP 1 906 355 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58SHOWA110334 A
- JP 2001339716 A
- US 20040260469 A1
- JP 2005207044 A

**Non-patent literature cited in the description**

- **Nelson.** 3D video motion detection and assessment. *38th Annual 2004 Int. Conf. on Security Technology, IEEE,* 2004